# EUROPÄISCHE PATENTANMELDUNG

(11) **EP 1 155 910 A2**
(43) Veröffentlichungstag der Anmeldung: **21.11.2001**
(21) Anmeldenummer: 01111325.5
(22) Anmeldetag: 09.05.2001
(51) Int. Cl.: B60Q 11/00, B60Q 1/38

(54) **Programmierbarer, elektronischer Blinkgeber**

(30) Priorität: 16.05.2000 DE 10024042
(71) Anmelder: ATMEL Germany GmbH, 74072 Heilbronn (DE)
(72) Erfinder: Fritz, Andreas, 74336 Brackenheim (DE)
(74) Vertreter: Kolb, Georg

(57) **Zusammenfassung**

1. Verfahren zur Überwachung eines Laststromkreis bei einem elektronischen Blinkgeber.
2.1 Bei bekannten Verfahren wird zur Erfassung eines Ausfalls eines Lastelementes die Vergleichsschwelle aus einer im Betrieb durchgeführten Spannungsmessung gewonnen und in einem flüchtigen Speicher abgelegt. Eine Fehlfunktion der Lastelemente während der Spannungsmessung führt zur Festlegung von falschen Vergleichsschwellen.
2.2 Nach dem erfindungsgemäßen Verfahren werden vor dem Betrieb des Laststromkreises die Kennwerte zur Ermittlung der Spannungsschwellen in einem nicht flüchtigen Speicher abgelegt. Eine Fehlfunktion aufgrund falsch festgelegten Vergleichsschwellen ist damit ausgeschlossen.

## Beschreibung

Die vorliegende Erfindung betrifft ein Verfahren zur Überwachung eines Laststromkreises einer Blinkgeberschaltung, gemäß dem Oberbegriff des Patentanspruchs 1.

Ein solches Verfahren ist aus der Druckschrift US 4 910 496 bekannt. Hierbei wird zwischen zwei aufeinanderfolgenden Blinkzyklen mittels Kontrolle einer Entladezeit, eines zu einem Schalttransistor parallel geschalteten Kondensators, der Lampenstrom überwacht. Hierzu wird die Größe der Entladezeit über einen Komparator und einen Analog-Digital Wandler in eine Pulszahl umgesetzt. Die Gesamtzahl der Pulse wird während eines Blinkintervalls mit einem vorgegebenen Wert, der in einem Permanentspeicher abgelegt ist, verglichen. Ist eine Blinklampe defekt, weicht die Pulszahl von dem vorgegeben Wert ab und es wird ein Ausfall erkannt.

Ein Nachteil des vorgenannten Verfahren ist es, daß zur Messung der Entladezeit des Kondensators eine aufwendige Analog-Digital Wandlung Schaltung notwendig ist. Ferner wird in jedem Lampenkreis ein Schalttransistor benötigt, dessen Parameterstreuungen und Degradation die Zuverlässigkeit des Verfahrens nachteilig beeinflußt.

Bei dem aus der Druckschrift US 5 331 314 bekannten Schaltkreis zur Lampenüberwachung, erzeugt der über ein Meßwiderstand fließende Lampenstrom einen Spannungsabfall. Mittels eines Komparators wird der Spannungswert mit einem vorgegebenen Wert verglichen, wobei der Schwellwert direkt bei der Herstellung der Schaltung eingestellt wird.

Nachteilig bei dem genannten Schaltkreis ist, daß die Anzahl und Leistung der verwendeten Blinklampen bereits bei der Produktion des Schaltkreises eingestellt werden muß und der Schaltkreis nicht gleichzeitig für eine unterschiedliche Anzahl von Blinklampen eingesetzt werden kann.

Ferner sind aus den Druckschriften DE 195 06 927 A1, US 4 451 822 und WO 99/64268 weitere Schaltungen und Verfahren bekannt, in denen eine Funktionskontrolle von Signal-lampen bzw. Blinklampen beschrieben wird. Zwar wird allen Druckschriften ein in einem "nicht flüchtigen Speicher" abgelegter Spannungswert mit einem aus dem Lampenstrom abgeleiteten Spannungswert verglichen, nachteilig ist jedoch, daß der abgeleitete Spannungswert entweder mittels einer aufwendigen Strom/Strom-Umsetzerschaltung (DE195 06 927 A1) oder einer aufwendigen Strom/Spannungsumsetzung (US 4 451 822) gewonnen wird oder der Spannungsvergleich mittels einem teuren Mikroprozessor (WO 99/64268) durchgeführt wird.

Ein weiteres Verfahren zur Überwachung eines Laststromkreises ist aus der Druckschrift EP 0 870 646 A2 bekannt. Dabei wird mittels einem einzigen Messwiderstand der Ausfall einer oder mehrerer Blinklampen erkannt. Um eine Fehlfunktion des Laststromkreises zu erfassen, wird der durch die Blinklampen fließende Strom über den Messwiderstand geführt und der erzeugte Spannungsabfall mit einer vorbestimmten Spannungsschwelle verglichen. Diese Spannungsschwelle wird dadurch gewonnen, indem bei anliegender Batteriespannung der Spannungswert nach dem Einschalten der Zündung am Messwiderstand beim erstmaligen Richtungsblinken gemessen und als Referenzwert in einem flüchtigen Speicher abgelegt wird. Weitere Voraussetzung ist, dass das Richtungsblinken mindestens zweimal durchgeführt wird. In Abhängigkeit der Batteriespannung und dem über den Meßwiderstand fließenden Strom, wird eine Spannungsschwelle erzeugt. Diese wird in einem flüchtigen Speicher abgelegt.

Ein wichtiges Anwendungsgebiet für elektronische Blinkgeber sind die Kraftfahrzeuge. Entsprechend den Zulassungsbestimmungen für Kraftfahrzeuge, muß ein Ausfall von Blinklampen von dem Blinkgeber erkannt und dem Fahrer des Fahrzeugs entweder optisch oder akustisch angezeigt werden. Dies geschieht, in dem vom Blinkgeber die Blinkfrequenz verdoppelt und dies dem Fahrer optisch über eine Anzeigelampe am Armaturenbrett oder akustisch über die erhöhte Frequenz des Blinkrelais mitgeteilt wird. Da in Europa die Blinklampen eine Leistung von 21 Watt aufweisen, in den USA jedoch auch Hauptlampen mit Leistungen von 27 Watt und mehr eingesetzt werden und zusätzlich je nach Modell auch eine unterschiedliche Anzahl von Blinklampen verwendet wird, ergeben sich hinsichtlich der zu überwachenden Leistung eine Vielzahl von Kombinationen. Die Anforderung besteht darin, einen einzigen Blinkgeber mit einer möglichst geringen Anzahl von externen Bauteilen für alle Varianten herzustellen.

Nachteil des in der Druckschrift EP 0 870 646 A2 beschriebenen Verfahren ist, daß nach jedem Ausfall der Spannungsversorgung, beispielweise durch Abklemmen der Batterie, die Werte der Spannungsschwellen gelöscht werden. Eine nochmalige Festlegung der Spannungsschwellen kann jedoch erst bei eingeschalteter Zündung und in Zusammenhang mit einem mindestens zweimaligen Richtungsblinken erfolgen. Erst danach kann der Schaltkreis wieder eine etwaige Fehlfunktion, wie beispielsweise den Ausfall von Blinklampen, erkennen. Ist jedoch während der Festlegung der Spannungsschwelle eine Blinklampe defekt, oder wird das Richtungsblinken nicht ordnungsgemäß durchgeführt, ermittelt der Schaltkreises die Werte der Spannungsschwellen falsch. Dies kann, bis zu einem erneuten Reset, zu einer bleibenden Fehlfunktion des Blinkgebers führen. Ein Ausfall von Blinklampen wird dann nicht oder falsch erkannt. Ein weiterer Nachteil ist, daß der Blinkgeber auch im Ruhezustand Strom benötigt, um die Werte der Spannungsschwellen in den Speichern zu erhalten.

Aufgabe der vorliegenden Erfindung ist es, ein Verfahren anzugeben, mit dem die internen Spannungsschwellen unabhängig von dem Betrieb des Blinkgebers im Kraftfahrzeug festgelegt und gegebenenfalls geändert werden können und insbesondere die Werte der Spannungsschwellen auch bei ausgeschalteter Versorgungsspannung (Batteriespannung) erhalten bleiben. Eine weitere Aufgabe besteht darin, eine Schaltungsanordnung zur Durchführung des Verfahren anzugeben, die sich einfach und kostengünstig herstellen läßt.

Die erstgenannte Aufgabe wird durch die kennzeichnenden Merkmale des Patentanspruches 1 gelöst. Günstige Ausgestaltungsformen sind Gegenstand von Unteransprüchen.

Hiernach besteht das Wesen der Erfindung darin, daß für die Überwachung eines Laststromkreises in einem elektronischen Blinkgeber ein oder mehrere Kennwerte, die als Spannungsschwellen verwendet werden, in einem nicht flüchtigen Speicher vorzugsweise vor dem Anlegen einer Versorgungsspannung, abgelegt werden. Die Kennwerte bestimmen sich aus der Gesamtleistung der Lastelemente bei einer vorgegebenen Versorgungsspannung. Beim Betrieb des Laststromkreises, werden die Spannungsschwellen dann mit dem Spannungswert am Meßwiderstand verglichen. Sowohl die Spannungsschwellen, als auch der an dem Meßwiderstand gemessene Spannungswert werden in Abhängigkeit der Betriebsspannung um den gleichen Betrag angehoben oder erniedrigt. Damit ist das Ergebnis des Vergleiches unabhängig von der Versorgungsspannung. Da die Speicherung der Kennwerte in einem nicht flüchtigen Speicher erfolgt, erhalten sich diese auch nach dem Abschalten der Versorgungsspannung. Dies ist besonders vorteilhaft bei Verwendung des Schaltkreises als Blinkgeber im Kraftfahrzeug, da im Fall von Reparaturen beispielsweise beim Austausch der Batterie, der Schaltkreis vollständig von der Versorgungsspannung getrennt ist. Die Möglichkeiten einer Fehlprogrammierung entfallen damit. Des weiteren wird durch das erfindungsgemäße Verfahren kein Ruhestrom benötigt und damit bei ausgeschalteter Zündung die Batterie nicht belastet.

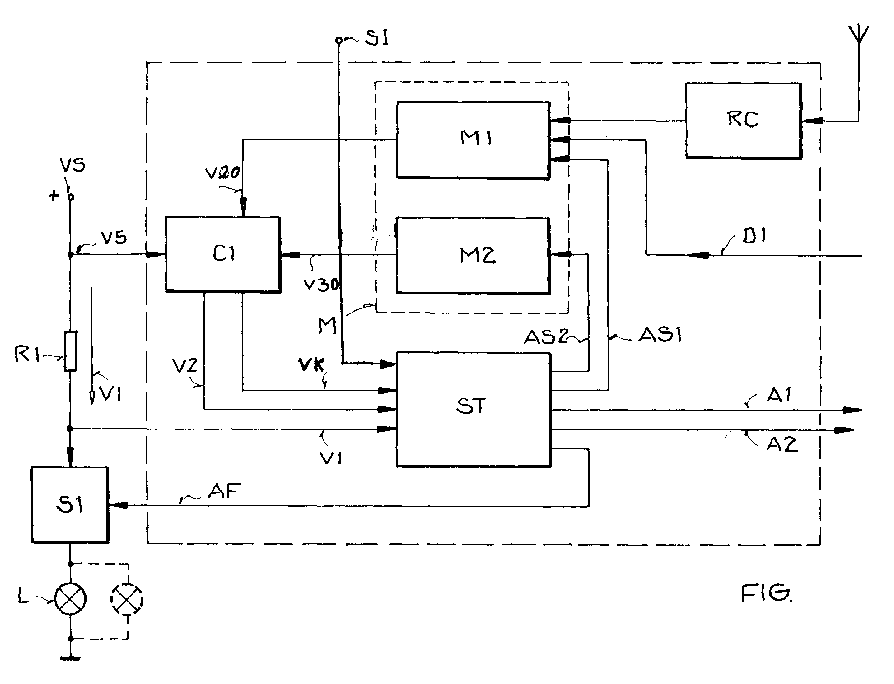

Nachfolgend wird die Erfindung anhand der Zeichnung Figur 1 dargestellt und erläutert:

Fig. 1 Blockschaltbild zur Erläuterung des erfindungsgemäßen Verfahrens.

Die in Figur 1 abgebildete Speichereinheit M besteht aus einem nicht flüchtigen Speicher M1 und einer flüchtigen Speichereinheit M2. Der nicht flüchtige Speicher wird vorzugsweise vor Inbetriebnahme der Schaltungsanordnung mit den Kennwerten V20 (normaler Betrieb), VK0 (Kurzschlußfall) für die Berechnung der Spannungsschwellen V2, VK programmiert. Die Berechnung der Spannungsschwellen V2, VK erfolgt in der Kontrolleinheit C1, beispielsweise durch Komparatoren, indem je nach Höhe der anliegenden Versorgungsspannung VS die Werte V20, VK0 erhöht oder erniedrigt werden. Der Wert V20 ergibt sich aus der Zahl der Lastelemente L (Blinklampen), deren Leistung und der Größe eines Meßwiderstandes R1. Entsprechend wird während des Betriebes die Spannungsschwelle V2 zur Dedektion einer Fehlfunktion innerhalb des Laststromkreises verwendet. Die zweite Spannungsschwelle VK wird zur Dedektion eines Kurzschlusses innerhalb des Lastkreises eingesetzt. Beide Spannungsschwellen V2, VK werden von der Kontrolleinheit C1 an die Eingänge der Steuereinheit ST angelegt. Beim Betrieb des Laststromkreises wird die Schalteinheit S1 von der Steuereinheit ST mit einem sich zeitlich veränderten Signal angesteuert. Der Spannungswert V1, dessen Höhe proportional zu dem Strom im Lastkreis ist, liegt ebenfalls an einem Eingang der Steuereinheit ST an. Diese vergleicht bei jedem Schaltvorgang der Schalteinheit S1 den Wert von V1 mit den beiden Spannungsschwellen V2, VK. Für das Ergebnis des Vergleiches lassen sich die folgenden vier Fälle unterscheiden:
Fall 1: Der gemessene Spannungswert V1 entspricht dem Wert der Spannungsschwelle V2. Die Steuereinheit S1 wird mit der normalen Frequenz von der Steuereinheit ST angesteuert. Die Ausgänge A1, A2 sind nicht aktiv.
Fall 2: Liegt der gemessene Spannungswert V1 unterhalb der Spannungsschwelle V2, wird ein Ausfall der Lastelemente L am Ausgang der Steuereinheit ST angezeigt, indem die Taktfrequenz der Schalteinheit S1 erhöht und ein weiteres Ausgangssignal A1 für die Ansteuerung von Kontrollampen ausgegeben wird.
Fall 3: Entspricht der an dem Widerstand R1 maximal gemessene Spannungswert V1 der Spannungsschwelle VK, wird von der Steuereinheit ST ein Kurzschluß am Ausgang A2 angezeigt und der Strom des Lastkreises temporär abgeschaltet.
Fall 4: Liegt der gemessene Spannungswert V1 innerhalb des Intervalls gegeben durch die Spannungsschwellen V2, VK, erkennt die Steuereinheit ST, daß zusätzliche Lastelemente L, beispielsweise durch Anhängen eines Anhängers beim Kraftfahrzeug angeschlossen wurden. Daraufhin legt die Steuereinheit ST einen neuen Kennwert V30, der dem am Meßwiderstand R1 gemessenen Spannungswert V1 entspricht, in der Speichereinheit M2 ab. Dieser Kennwert V30 überschreibt in der Kontrolleinheit C1 die bisherige Spannungsschwelle V2, d.h. die für den Vergleich mit dem Spannungswert V1 maßgebliche untere Spannungsschwelle wird hochgesetzt. Dieser Zustand bleibt bis zum Ausschalten der Signalspannung SI, beispielsweise Ausschalten der Zündung, erhalten. Beim erneuten Einschalten wird dann der im nicht flüchtigen Speicher abgelegte ursprüngliche Kennwert V20 verwendet.

Für den nicht flüchtigen Speicher können sowohl mehrfach programmierbare Speicher, beispielsweise EEPROMs, als auch einfach programmierbare Speicher, beispielsweise Zapstufen (Schießen von Zenerdioden) oder Fusestufen (Verdampfen von Leiterbahnen), eingesetzt werden. Die Übertragung der Kennwerte V20, VK0 für die Spannungsschwellen V2 bzw VK kann dabei berührungslos, mittels induktiver oder infraroter Datenübertragung über den Empfänger RC, als auch durch direkte Kontaktierung, beispielsweise mittels einer seriellen Schnittstelle über die Signalleitung D1, erfolgen.

## Patentansprüche

1. Verfahren zur Überwachung eines Laststromkreis bei einem elektronischen Blinkgeber, bei dem der gesamte Laststrom über einen Messwiderstand (R1) geführt wird und der an dem Messwiderstand auftretende Spannungsabfall (V1) von einer Steuereinheit (ST) elektronisch verglichen wird, mit einer in Abhängigkeit der anliegenden Versorgungsspannung (VS) von einer Kontrolleinheit (C1) aus einem Kennwert (V20) errechneten Spannungsschwelle (V2) und als Ergebnis des Vergleiches von der Steuereinheit (ST) ein Ausgangssignal (A1, A2, AS1, AS2) erzeugt wird,
**dadurch gekennzeichnet, daß**
der Kennwert (V20), der sich aus der Gesamtleistung der verwendeten Lastelemente (L) bei einer vorgegebenen Versorgungsspannung bestimmt, in einem nicht flüchtigen Speicher (M1) abgelegt wird.

2. Verfahren nach Anspruch 1, **dadurch gekennzeichnet, daß** der Kennwert (V20) vor dem Betrieb des Laststromkreises in dem nicht flüchtigen Speicher (M1) abgelegt wird.

3. Verfahren nach Anspruch 1 und Anspruch 2, **dadurch gekennzeichnet, daß** bei einem Spannungswert (V1) am Meßwiderstand (R1), der kleiner als die Spannungsschwelle (V2) ist, ein Ausfall des Lastelementes (L) angezeigt wird, indem vorzugsweise die Taktfrequenz (AF) einer Schalteinheit (S1) verändert oder durch ein Ausgangssignal (A1) eine Kontrolleuchte angesteuert wird.

4. Verfahren nach einem der Ansprüche 1 bis 3, **dadurch gekennzeichnet, daß** zur Ermittlung eines Kurzschlusses in dem nicht flüchtigen Speicher (M1) ein weiterer Kennwert (VK0) abgelegt und daraus eine weitere Spannungsschwelle (VK) errechnet wird, die größer als die bisherige Spannungsschwelle (V2) ist und sofern der gemessene Spannungswert (V1) der Spannungsschwelle (VK) entspricht, ein Ausgangssignal (A2) erzeugt wird.

5. Verfahren nach Anspruch 4, **dadurch gekennzeichnet, daß** wenn der Spannungswert (V1) innerhalb des Intervalls, gegeben durch die Spannungsschwelle (V2) und Spannungsschwelle (VK) liegt, von der Steuereinheit (ST) ein Kennwert (V30), der zwischen den Kennwerten (V20, VK0) liegt, in einen flüchtigen Speicher (M2) abgelegt wird und damit von der Kontrolleinheit (C1) eine neue Spannungsschwelle (V2) berechnet wird.

6. Verfahren nach einem der Ansprüche 4 oder 5, **dadurch gekennzeichnet, daß** die Kennwerte (V20, VK0) in mehrfach programmierbare nicht flüchtige Speicher (M1), beispielsweise einem EEPROM, abgelegt werden.

7. Verfahren nach einem der Ansprüche 4 oder 5, **dadurch gekennzeichnet, daß** die Kennwerte (V20, VK0) in einmal programmierbare nicht flüchtige Speicher (M1), beispielsweise durch Schießen einer Zenerdiode oder Verdampfen einer Leiterbahn, abgelegt werden.

8. Verfahren nach einem der Ansprüche 4 bis 7, **dadurch gekennzeichnet, daß** die Eingabe der Kennwerte (V20, VK0) für die Spannungsschwellen (V2, VK) kontaktlos, beispielsweise mittels induktive oder infrarote Datenübertragung erfolgt.

9. Schaltungsanordnung zur Durchführung des Verfahrens nach einem der vorangegangenen Ansprüche, mit einem Meßwiderstand (R1), wenigstens einem Schaltelement (S1) zur Steuerung des Laststromkreises wenigstens einem geschalteten Lastelement (L), beispielsweise Blinklampen, einem integrierten Schaltkreis mit wenigstens einer Kontrolleinheit (C1) zur Bildung der Spannungsschwellen (V2, VK) und einer Steuereinheit (ST), **dadurch gekennzeichnet, daß**
• eine Speichereinheit (M) integriert ist, die sich intern von der Steuereinheit (ST) oder extern über einen Empfängereinheit (RC) oder durch Anlegen von Signalpegeln (D1) programmieren läßt, und
• die Kontrolleinheit (C1) den nicht flüchtigen Speicher (M1) ausliest und der Steuereinheit (ST) die beiden Spannungsschwellen (V2, VK) zur Verfügung stellt.
